# EUROPEAN PATENT SPECIFICATION

(11) **EP 2 288 117 B1**
(45) Date of publication and mention of the grant of the patent: **14.03.2012**
(21) Application number: 09168165.0
(22) Date of filing: 19.08.2009
(51) Int. Cl.: H04M 1/02, B25F 5/02, H01M 2/10, H04B 1/38

(54) **Cover and pivoting latch assembly for a portable electronic device**
Abdeckung und Schwenkriegeleinheit für ein tragbares elektronisches Gerät
Couvercle et ensemble de loquet pour dispositif électronique portable

(43) Date of publication of application: 23.02.2011
(73) Proprietor: RESEARCH IN MOTION LIMITED, Waterloo, Ontario N2L 3W8 (CA)
(72) Inventor: Rajagopal, Vijai, 380015, Ahmedabad (IN); Infanti, James Carl, Waterloo Ontario N2L 3W8 (CA); Kyowski, Timothy Herbert, Waterloo Ontario N2L 3W8 (CA)
(74) Representative: Phillips, Emily Elizabeth

(56) References cited:
- EP-A2- 0 986 232
- WO-A1-00/08698
- US-A1- 2005 221 654
- US-A1- 2008 193 837

## Description

### Background of the Disclosure

### 1. Field of the Disclosure

The present disclosure relates to portable electronic devices, including, but not limited, to handheld wireless communication devices; and more particularly to a cover by which a user gains access to a battery compartment in such a device.

### 2. Description of the Related Art

Certain portable electronic devices, handheld wireless communication devices in particular, are battery powered. The device typically has a metal or plastic housing with a compartment for the battery. A cover releasably engages the housing over the compartment to enable the user to access the battery for replacement. In conventional devices, the cover generally is closed by sliding it along a recess in the housing. As that sliding occurs, hook shaped tabs on the cover engage apertures in the housing and then travel into smaller sections of the apertures in which the tabs are captivated. Such captivation holds the cover on the housing.

Sliding the cover in the opposite direction moves the tabs into the larger sections of the apertures enabling the cover to be moved away from the housing. In that manner, the cover can be removed to open the battery compartment.
US-A-200S/0193837 and EP-A-0986232 disclose flexible latching mechanisms for a cover of an electronic device.

Because the cover must be secured tightly to the housing, some users find it physically challenging to slide the cover of conventional devices off and on the housing.
The invention is set out in the claims.

FIGURE 1 is a perspective view of a rear side of a portable electronic device showing the cover over a battery compartment defined in a housing;

FIGURE 2 illustrates the inside major surface of the cover showing latch assemblies for holding the cover on the housing;

FIGURE 3 is an enlarged view of one of the latch assemblies on a cover that has been removed from the housing;

FIGURE 4 is a cross sectional view through a hinge of one of the latch assemblies;

FIGURE 5 is a partial cross sectional view depicting engagement of a latch assembly with the housing; and

FIGURE 6 shows the cover partially removed from the housing.

A portable electronic device has a housing with a battery compartment that is closed by a cover. The cover has at least one and preferably two spring-loaded latch assemblies that are pivotally located along opposite edges of the cover. In the normal positions, tabs on the latch assemblies extend under catches on the housing to hold the cover in place.

The user is able to simultaneously depress the two latch assemblies and pivot the tabs from their normal positions away from engagement with the catches. This permits the cover to be lifted outward and removed from the housing, thereby exposing the battery compartment.

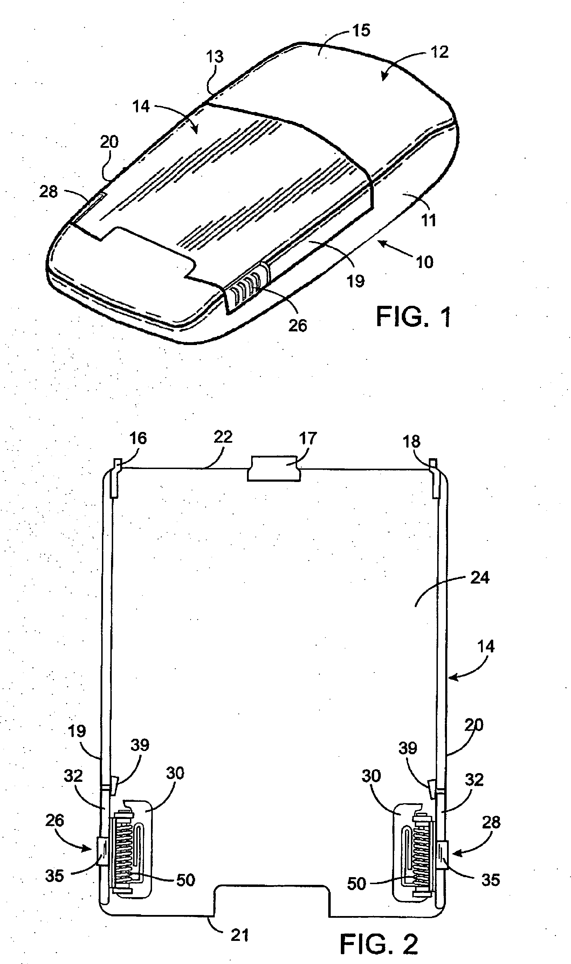

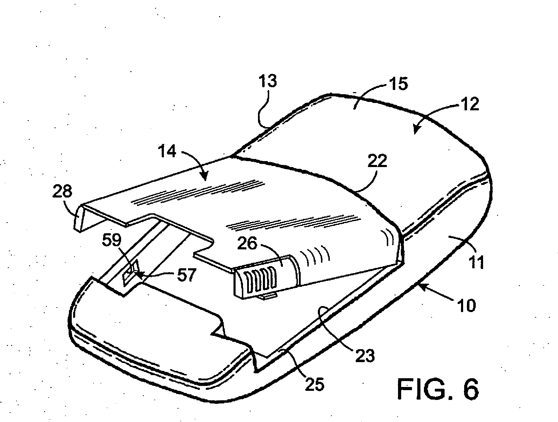

With initial reference to Figure 1, a portable electronic device 10, such as a handheld wireless communication device, for example, includes a housing 12 with a cover 14. The cover 14 preferably is made of metal, while the housing may be either metal or molded plastic, although it is contemplated that alternative materials with similar properties may be appropriate. The cover 14 is removably secured over a battery compartment or opening 23 (see Figure 6) defined in the housing 12. Specifically the cover 14 fits into a recess 25 defined in the housing 12 that surrounds the battery compartment 23, thus when in place, the cover is flush with the exterior surfaces of the housing. The cover extends across a rear surface 15 of the housing 12 and wraps around onto two side surfaces 11 and 13. First and second latch assemblies 26 and 28 are pivotally located along opposite edges of the cover 14 and engage the housing 12 to secure the cover in place.

With additional reference to Figure 2, the cover 14 has opposing first and second edges 19 and 20 spaced apart and extending along the length of the cover. Third and fourth edges 21 and 22 extend between the first and second edges 19 and 20 on opposite sides of the cover. A set of three fixed prongs 16, 17 and 18 project from the fourth edge 22 which extends across the width of the housing 12 when the cover 14 is in place. The first and third fixed prongs 16 and 18 are adjacent the first and second edges 19 and 20 of the cover 14 and the second fixed prong 17 is located substantially at the middle of the fourth edge 22, although it is appreciated that the prongs 16-18 are not limited to the above-described orientation. The fixed prongs 16-18 project outward from the cover and engage corresponding holes or a rim (not shown) of the housing 12 to hold the fourth edge 22 in place. A lesser or greater number of fixed prongs may be provided as required to hold the fourth edge 22 in place.

The releasable first latch assembly 26 is located on the inside surface 24 of the cover 14 along the first edge 19 proximate a corner with the third edge 21. The releasable second latch assembly 28 is similarly located along the second edge 20 proximate an opposing corner with the third edge 21. As will be described, the first and second latch assemblies 26 and 28 also engage the housing 12 to hold the cover 14 in place and can be manually operated to disengage the housing in order to remove the cover 14.

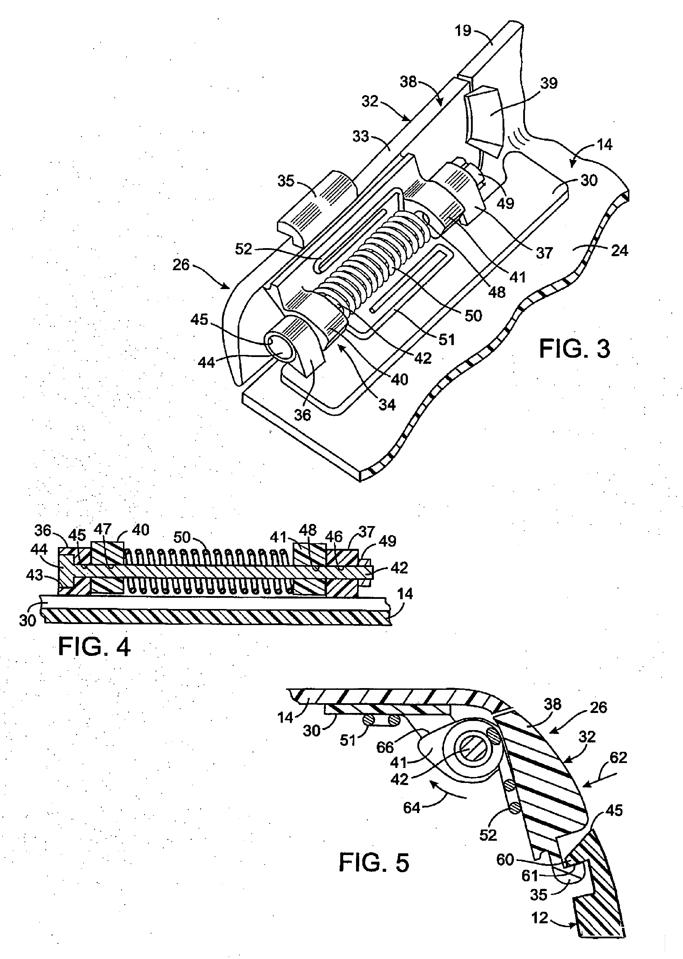

The first and second latch assemblies 26 and 28 have identical construction, but are mirror images of each other. Thus the first latch assembly 26 shown in Figure 3 will be described in detail, with the understanding that the description applies equally to the second latch assembly 28.

The first latch assembly 26 includes a base 30 and a latch 32 that are coupled to each other by a hinge 34. Although other configurations may be suitable, the base 30 and the latch 32 are arranged substantially perpendicular to each other. Specifically, the base 30 is secured to the major inside surface 24 of the cover 14, such as by an adhesive or by welding, for example. The base 30 has a first base knuckle 36 and a second base knuckle 37 projecting therefrom. The pair of base knuckles 36 and 37 are spaced apart and form parts of the hinge 34. With additional reference to Figure 4, the first base knuckle 36 has a first aperture 45 there through and a second base knuckle 37 has a second aperture 46 there through.

The latch 32 has a plate 38 that extends aligned with the first edge 19 of the cover 14. The plate 38 has a hook-like tab 35 projecting from a rim 33 of the plate. With reference to Figure 5, when the cover 14 is secured to the housing 12, the hook-like tab 35 of the first latch assembly 26 engages a corresponding first catch 60 that has a first catch area 61 on the housing 12. The housing 12 has a similar second catch 57 and a second catch area 59, shown in Figure 6, for the second latch assembly 28. Returning to Figures 3 and 4, first and second latch knuckles 40 and 41 project inwardly from the plate 38 and are located between the two base knuckles 36 and 37. The first and second latch knuckles 40 and 41 also are parts of the hinge 34. The first latch knuckle 40 has a third aperture 47 there through and the second latch knuckle 41 has a similar fourth aperture 48. The four apertures 45-48 in the base and latch knuckles are aligned and have a hinge pin 42 passing there through to connect the knuckles and allow the latch 32 to pivot with respect to the base 30. To retain the hinge pin 42, the hinge pin has an enlarged head 44 at one end that fits within a corresponding enlarged countersunk portion 43 defined in the first aperture 45 of the first base knuckle 36. Further, a collar 49 is crimped onto the exposed opposite end of the hinge pin 42 to hold the pin in the set of knuckles. The latch 32 is able to pivot about the hinge pin 42 into different rotational positions with respect to the base 30 and therefore also with respect to the cover 14, as will be described in further detail below.

A torsion spring 50 is located in a space defined between the first and second latch knuckles 40 and 41 and has the hinge pin 42 passing there through. One end section 51 of the torsion spring 50 abuts the base 30 and the opposite end section 52 abuts an inside surface of the latch plate 38. The latch plate 38 has a stop 39 that projects laterally parallel to the first edge 19. The force exerted by the torsion spring 50 biases the latch 32 into a first rotational position with respect to the base 30 in which the stop 39 on the latch plate 38 abuts the inside surface of the first edge 19 of the cover, as shown in Figure 3. The stop 39 restricts that bias and limits the rotational motion in a first direction to position the latch plate generally coplanar with the first edge 19 when the cover is removed from the housing.

With reference to Figures 1 and 5, when the user of the portable electronic device 10 desires to open the cover 14, the user grasps the first and second latch assemblies 26 and 28 between a thumb and an index finger and squeezes those fingers together thereby depressing both those latch assemblies. With particular reference to Figure 5, that squeezing motion applies a force, indicated by arrow 62, to the plate 38 of each latch assembly 26 and 28, causing the respective latch 32 to rotate about the hinge pin 42 in a direction indicated by arrow 64. The rotation of the first latch 32, and likewise the similar second latch of the second latch assembly 28, is limited by the shape of the first and second latch knuckles 40 and 41. Specifically, such a shape is similar to the lobe of a cam and has a cam surface 66 shown in Figure 5, that in an extreme inward rotational position about the hinge pin 42 strikes the base 30 to stop further rotation. This cam surface 66 thus limits the inward rotational motion of each latch 32 in a second direction, thereby preventing damage to internal components of the portable electronic device 10. Squeezing the first and second latch assemblies 26 and 28 together to open the battery compartment is less physically challenging as compared to the slide mechanism described above for similar conventional devices.

The rotational motion causes the latch 32 to pivot away from engagement with the first catch 60 on the housing 12. In a second rotational position of the latch 32 at which the tab 35 has cleared the first catch 60 and its first catch area 61, the user is able to lift the third edge 21 of the cover 14 away from the housing 12, as shown in Figure 6. After the cover 14 has been lifted sufficiently, the user can pull the fourth edge 22 of the cover away from the housing 12. This pulling action frees the three fixed prongs 16, 17, and 18 on the underside of the cover (Figure 2) from the housing, thereby enabling the cover 14 to be completely removed. The cover can be reinstalled on the housing by reversing the removal steps.

The present latching mechanism for the cover 14 employs two separate latch assemblies 26 and 28 so that should one of them fail, the other still secures the cover 14 to the housing 12. The cam surface 66 inhibits each of the first and second latch assemblies 26 and 28 from being damaged due to over squeezing by the user. Both the stop 39 and the cam surface 66 act to prevent excessive rotational travel of the respective latch 32. Nevertheless, should damage to the first and second latch assemblies 26 and 28 occur, the repair is easily effected by replacing the cover 14. This offers an advantage over previous cover designs in which the latch mechanism was incorporated into the housing of the portable electronic device and thus required that the entire housing be replaced or at least taken apart for repair, neither of which is something that a user should do.

The foregoing description was primarily directed to a preferred embodiment of the present latch assembly. Although some attention was given to various alternatives within the scope of the disclosure, it is anticipated that one skilled in the art will likely realize additional alternatives that are now apparent from disclosure of embodiments of the present latch assembly. Accordingly, the scope of the disclosure should be determined from the following claims and not limited by the above disclosure.

## Claims

1. A portable electronic device (10) comprising a housing (12) with an opening (23), a cover (14), and an apparatus for securing the cover over the opening, wherein the cover has opposing first and second edges (19, 20) between which third and fourth edges (21, 22) extend, said apparatus comprising:
a first latch assembly (26) comprising a first latch (32) pivotally coupled, by a first hinge pin (42), to the cover (14) along the first edge, the first latch assembly having a first torsion spring (50) through which the first hinge pin extends and biasing the first latch rotationally into releasable engagement with the housing (12); and
a second latch assembly (28) comprising a second latch (32) that is pivotally coupled, by a second hinge pin (42), to the cover (14) along the second edge, the second latch assembly having a second torsion spring (50) through which the second hinge pin extends and biasing the second latch (32) rotationally into releasable engagement with the housing (12).

2. The portable electronic device (10) as recited in claim 1 wherein:
the first latch assembly (26) further comprises a first pair of latch knuckles (40, 41) projecting from the first latch (32) and engaging the first hinge pin (42), and a first pair of base knuckles (36, 37) secured to the cover (14) and engaging the first hinge pin; and
the second latch assembly (28) further comprises a second pair of latch knuckles (40, 41) projecting from the second latch (32) and engaging the second hinge pin (42), and a second pair of base knuckles (36, 37) secured to the cover (14) and engaging the second hinge pin.

3. The portable electronic device (10) as recited in claim 2 wherein each of the latch knuckles (40, 41) has an first aperture therein, and the first hinge pin (42) extends through the first apertures; and wherein each of the base knuckles (36, 37) has an second aperture therein, and the second hinge pin (42) extends through the second apertures.

4. The portable electronic device (10) as recited in claim 3 wherein the first pair of latch knuckles (40, 41) has a first cam surface (66) that limits rotational motion of the first latch (32); and wherein the second pair of latch knuckles (40, 41) has a second cam surface (66) that limits rotational motion of the second latch (32).

5. The portable electronic device (10) as recited in claim 3 wherein the first latch assembly (26) further comprises first base (30) secured to the cover (14) and from which the first pair of base knuckles (36, 37) project; and the second latch assembly (28) further comprises second base (30) secured to the cover and from which the second pair of base knuckles (36, 37) project.

6. The portable electronic device (10) as recited in claim 1 wherein each of the first latch (32) and the second latch (32) has a stop (39) that engages the cover (14) to limit rotational motion in a first direction.

7. The portable electronic device (10) as recited in claim 6 wherein each of the first latch assembly (26) and the second latch assembly (28) has a latch knuckle (41) that limits rotational motion in a second direction.

8. The portable electronic device (10) as recited in claim 1 wherein:
the housing (12) has a first catch (60) and a second catch (57);
the first latch (32) has a first tab (35) that releasably engages the first catch; and
the second latch (32) has a second tab (35) that releasably engages the second catch.

9. The portable electronic device (10) as recited in claim 1 wherein the first and second latch assemblies (26, 28) are proximate to the third edge (21); and further comprising at least one prong (16, 17, 18) attached to the cover (14) and projecting from the fourth edge (22) into releasable engagement with the housing (12).

10. The portable electronic device (10) as recited in claim 1 wherein the first and second edges (19, 20) are located on opposite sides of the cover (14).

## Patentansprüche

1. Tragbare elektronische Vorrichtung (10), die ein Gehäuse (12) aufweist mit einer Öffnung (23), einer Abdeckung (14) und einer Apparatur zum sicheren Befestigen der Abdeckung über der Öffnung, wobei die Abdeckung gegenüberliegende erste und zweite Kanten (19, 20) hat, zwischen denen sich dritte und vierte Kanten (21, 22) erstrecken, wobei die Apparatur aufweist:
eine erste Verriegelungsbaugruppe (26), die eine erste Verriegelung (32) aufweist, die über einen ersten Scharnierstift (42) mit der Abdeckung (14) entlang der ersten Kante schwenkbar gekoppelt ist, wobei die erste Verriegelungsbaugruppe eine erste Torsionsfeder (50) hat, durch die sich der erste Scharnierstift erstreckt und die erste Verriegelung rotational in einen lösbaren Eingriff mit dem Gehäuse (12) drückt; und
eine zweite Verriegelungsbaugruppe (28), die eine zweite Verriegelung (32) aufweist, die über einen zweiten Scharnierstift (42) mit der Abdeckung (14) entlang der zweiten Kante schwenkbar gekoppelt ist, wobei die zweite Verriegelungsbaugruppe eine zweite Torsionsfeder (50) hat, durch die sich der zweite Scharnierstift erstreckt und die zweite Verriegelung (32) rotational in einen lösbaren Eingriff mit dem Gehäuse (12) drückt.

2. Tragbare elektronische Vorrichtung (10) gemäß Anspruch 1, wobei:
die erste Verriegelungsbaugruppe (26) weiter ein erstes Paar von Verriegelungsgelenken (40, 41) aufweist, die von der ersten Verriegelung (32) herausragen und den ersten Scharnierstift (42) in Eingriff halten, und ein erstes Paar von Basisgelenken (36, 37), die an der Abdeckung (14) angebracht sind und den ersten Scharnierstift in Eingriff halten; und
die zweite Verriegelungsbaugruppe (28) weiter ein zweites Paar von Verriegelungsgelenken (40, 41) aufweist, die von der zweiten Verriegelung (32) herausragen und den zweiten Scharnierstift (42) in Eingriff halten, und ein zweites Paar von Basisgelenken (36, 37), die an der Abdeckung (14) angebracht sind und den zweiten Scharnierstift in Eingriff halten.

3. Tragbare elektronische Vorrichtung (10) gemäß Anspruch 2, wobei jedes der Verriegelungsgelenke (40, 41) eine erste Öffnung darin hat, und wobei sich der erste Scharnierstift (42) durch die ersten Öffnungen erstreckt; und wobei jedes der Basisgelenke (36, 37) eine zweite Öffnung darin hat, und wobei sich der zweite Scharnierstift (42) durch die zweiten Öffnungen erstreckt.

4. Tragbare elektronische Vorrichtung (10) gemäß Anspruch 3, wobei das erste Paar von Verriegelungsgelenken (40, 41) eine erste Nockenoberfläche (66) hat, die eine Drehbewegung der ersten Verriegelung (32) begrenzt; und wobei das zweite Paar von Verriegelungsgelenken (40, 41) eine zweite Nockenoberfläche (66) hat, die eine Drehbewegung der zweiten Verriegelung (32) begrenzt.

5. Tragbare elektronische Vorrichtung (10) gemäß Anspruch 3, wobei die erste Verriegelungsbaugruppe (26) weiter eine erste Basis (30) aufweist, die an der Abdeckung (14) angebracht ist und von der das erste Paar von Basisgelenken (36, 37) herausragt; und die zweite Verriegelungsbaugruppe (28) weiter eine zweite Basis (30) aufweist, die an der Abdeckung angebracht ist und von der das zweite Paar von Basisgelenken (36, 37) herausragt.

6. Tragbare elektronische Vorrichtung (10) gemäß Anspruch 1, wobei jede der ersten Verriegelung (32) und der zweiten Verriegelung (32) ein Stopelement (39) hat, das die Abdeckung (14) in Eingriff hat, um eine Drehbewegung in eine erste Richtung zu begrenzen.

7. Tragbare elektronische Vorrichtung (10) gemäß Anspruch 6, wobei jede der ersten Verriegelungsbaugruppe (26) und der zweiten Verriegelungsbaugruppe (28) ein Verriegelungsgelenk (41) hat, das eine Drehbewegung in eine zweite Richtung begrenzt.

8. Tragbare elektronische Vorrichtung (10) gemäß Anspruch 1, wobei:
das Gehäuse (12) eine erste Einrastung (60) und eine zweite Einrastung (57) hat;
die erste Verriegelung (32) ein erstes Tab (35) hat, das mit der ersten Einrastung lösbar in Eingriff ist; und
die zweite Verriegelung (32) ein zweites Tab (35) hat, das mit der zweiten Einrastung lösbar in Eingriff ist.

9. Tragbare elektronische Vorrichtung (10) gemäß Anspruch 1, wobei die ersten und zweiten Verriegelungsbaugruppen (26, 28) in der Nähe der dritten Kante (21) sind; und weiter
zumindest einen Vorsprung (16, 17, 18) aufweist, der an der Abdeckung (14) angebracht ist und von der vierten Kante (22) herausragt in einen lösbaren Eingriff mit dem Gehäuse (12).

10. Tragbare elektronische Vorrichtung (10) gemäß Anspruch 1, wobei sich die ersten und zweiten Kanten (19, 20) an gegenüberliegenden Seiten der Abdeckung (14) befinden.

## Revendications

1. Dispositif électronique portable (10) comprenant un boîtier (12) pourvu d'une ouverture (23), un couvercle (14), et un agencement pour fixer le couvercle sur l'ouverture, le couvercle comportant des premier et deuxième bords (19, 20) entre lesquels s'étendent des troisième et quatrième bords (21, 22), ledit agencement comprenant :
un premier ensemble loquet (26) comprenant un premier loquet (32) accouplé pivotant, par un premier axe de charnière (42), au couvercle (14) le long du premier bord, le premier ensemble loquet comportant un premier ressort de torsion (50) traversé par le premier axe de charnière et sollicitant le premier loquet en rotation jusqu'à un engagement amovible avec le boîtier (12) ; et
un second ensemble loquet (28) comprenant un second loquet (32) accouplé pivotant, par un second axe de charnière (42), au couvercle (14) le long du second bord, le second ensemble loquet comportant un second ressort de torsion (50) traversé par le second axe de charnière et sollicitant le second loquet (32) en rotation jusqu'à un engagement amovible avec le boîtier (12).

2. Dispositif électronique portable (10) selon la revendication 1, dans lequel :
le premier ensemble loquet (26) comprend, en outre, une première paire d'articulations de loquet (40, 41) faisant saillie depuis le premier loquet (32), et engageant le premier axe de charnière (42), et une première paire d'articulations de base (36, 37) fixées au couvercle (14) et engageant le premier axe de charnière ; et
le second ensemble loquet (28) comprend, en outre, une seconde paire d'articulations de loquet (40, 41) faisant saillie depuis le second loquet (32), et engageant le second axe de charnière (42), et une seconde paire d'articulations de base (36, 37) fixées au couvercle (14) et engageant le second axe de charnière.

3. Dispositif électronique portable (10) selon la revendication 2, dans lequel chacune des articulations de loquet (40, 41) comporte une première ouverture en son sein, et le premier axe de charnière (42) passe par les premières ouvertures ; et dans lequel chacune des articulations de base (36, 37) comporte une seconde ouverture en son sein, et le second axe de charnière (42) passe par les secondes ouvertures.

4. Dispositif électronique portable (10) selon la revendication 3, dans lequel la première paire d'articulations de loquet (40, 41) comporte une première surface de came (66) qui limite le mouvement de rotation du premier loquet (32) ; et dans lequel la seconde paire d'articulations de loquet (40, 41) comporte une seconde surface de came (66) qui limite le mouvement de rotation du second loquet (32).

5. Dispositif électronique portable (10) selon la revendication 3, dans lequel le premier ensemble loquet (26) comprend, en outre, une première base (30) fixée au couvercle (14) et à partir de laquelle la première paire d'articulations de base (36, 37) fait saillie ; et le second ensemble loquet (28) comprend, en outre, une seconde base (30) fixée au couvercle et à partir de laquelle la seconde paire d'articulations de base (36, 37) fait saillie.

6. Dispositif électronique portable (10) selon la revendication 1, dans lequel le premier loquet (32) et le second loquet (32) comportent chacun une butée (39) qui engage le couvercle (14) pour limiter le mouvement de rotation dans une première direction.

7. Dispositif électronique portable (10) selon la revendication 6, dans lequel le premier ensemble loquet (26) et le second ensemble loquet (28) comprennent chacun une articulation de loquet (41) qui limite le mouvement de rotation dans une seconde direction.

8. Dispositif électronique portable (10) selon la revendication 1, dans lequel :
le boîtier (12) comporte un premier cliquet (60) et un second cliquet (57) ;
le premier loquet (32) comporte une première patte (35) qui engage de façon amovible le premier cliquet ; et
le second loquet (32) comporte une seconde patte (35) qui engage de façon amovible le second cliquet.

9. Dispositif électronique portable (10) selon la revendication 1, dans lequel les premier et second ensembles loquets (26, 28) sont situés à proximité du troisième bord (21) ; et comprennent, en outre, au moins une dent (16, 17, 18) fixée au couvercle (14) et faisant saillie depuis le quatrième bord (22) en engagement amovible avec le boîtier (12).

10. Dispositif électronique portable (10) selon la revendication 1, dans lequel les premier et deuxième bords (19, 20) sont situés sur des côtés opposés du couvercle (14).
